# EUROPEAN PATENT APPLICATION

(11) **EP 2 671 764 A1**
(43) Date of publication of application: **11.12.2013**
(21) Application number: 12742011.5
(22) Date of filing: 05.01.2012
(51) Int. Cl.: B60R 22/46

(54) **PRETENSIONER DEVICE AND SEAT BELT DEVICE**

(30) Priority: 01.02.2011 JP 2011019701
(71) Applicant: Ashimori Industry Co., Ltd., Osaka-shi, Osaka 550-0014 (JP)
(72) Inventor: MIYOSHI Hiroyuki, Settsu-shi Osaka 566-0001 (JP); KIM Do Shik, Settsu-shi Osaka 566-0001 (JP); LEE Byung Jin, Settsu-shi Osaka 566-0001 (JP)
(74) Representative: Kilian Kilian & Partner
(86) International application number: PCT/JP2012/050060
(87) International publication number: WO 2012/105278

(57) **Abstract**

In a pretensioner main body, a cylindrical space and a gas introducing space connecting with one end of the cylindrical space are formed, and a blocking end portion including a first through hole portion is provided to block the gas introducing space. A piston is movable within the cylindrical space, and a coupling member coupled to the piston is guided to the outside from the gas introducing space through the first through hole portion. An elastic seal member is provided on the inner surface side of the blocking end portion and includes a second through hole portion allowing the coupling member to pass therethrough. A gas buffer member is provided at such a position as to sandwich the elastic seal member between the blocking end portion and itself, where a third through hole portion having a shape and a size corresponding to the shape and size of the cross-section of the coupling member is formed.

## Description

### Technical Field

The present invention relates to the technology of applying tension to a seat belt in, for example, sudden deceleration of vehicles.

### Background Art

Conventionally, the pretensioner disclosed in Patent Document 1 is known as this type of pretensioner.

The pretensioner disclosed in Patent Document 1 includes a cylinder defining a bore, an arrangement to supply gas to the bore, and a piston movable within the bore in response to the supply of gas to the bore. The piston is coupled to an elongated element coupled to part of a safety belt, and the elongated element is guided to the outside through an outlet passage on an end wall of the cylinder. Further, in order to avoid gas leakage through the outlet passage on the end wall of the cylinder, a seal formed of an elastic material is provided in one end of the bore, and the elongate element is guided to the outside through the seal.

### Prior Art Document

### Patent Document

Patent Document 1: Japanese Unexamined Patent Application Publication (Translation of PCT Application) No. 2005-528288

### Summary of the Invention

### Problem to be Solved by the Invention

In the pretensioner disclosed in Patent Document 1, high temperature and pressure gas generated by the gas generator is supplied into the bore. According to Patent Document 1, the elastic material used for the seal generally tends to be susceptible to heat and have a small strength.

According to Patent Document 1, in terms of configuration, the high temperature and pressure gas supplied into the bore is sprayed directly onto the seal. Accordingly, in a case where, for example, the output of the gas generator is increased for higher tension, the seal may deform excessively and the pressure retaining property thereof may decrease.

Therefore, an object of the present invention is to improve the pressure retaining property of a pretensioner device.

### Means to Solve the Problem

In order to solve the above-mentioned problem, a first aspect includes: a pretensioner main body, in which a cylindrical space and a gas introducing space connecting with one end of the cylindrical space are formed, a gas supply port for supplying gas to the gas introducing space is formed, and a blocking end portion including a first through hole portion is provided so as to block the gas introducing space on a side opposite to the cylindrical space; a gas generator configured to supply gas to the gas introducing space through the gas supply port; a piston disposed so as to move within the cylindrical space; a coupling member that includes one end coupled to the piston and is guided to the outside from the gas introducing space through the first through hole portion; an elastic seal member that is provided on an inner surface side of the blocking end portion and includes a second through hole portion allowing the coupling member to pass therethrough; and a gas buffer member that is provided at such a position as to sandwich the elastic seal member between the blocking end portion and the gas buffer member and includes a third through hole portion having a shape and a size corresponding to a shape and a size of a cross-section of the coupling member.

In a second aspect, in the pretensioner device according to the first aspect, the coupling member includes a plurality of wires bundled, and the third through hole portion is configured such that a plurality of holes allowing the plurality of wires to respectively pass therethrough are formed in a connecting manner or a separate manner.

In a third aspect, in the pretensioner device according to the first or second aspect, the gas buffer member includes: a tubular portion into which the coupling member is inserted so as to move within the gas introducing space; and a flanged portion formed so as to project from one end of the tubular portion toward an outer periphery thereof and provided on the gas introducing space side of the elastic seal member.

In a fourth aspect, in the pretensioner device according to the first or second aspect, the gas buffer member is a plate member provided on the gas introducing space side of the elastic seal member.

In a fifth aspect, the pretensioner device according to the fourth aspect further includes a tubular member into which the coupling member is inserted so as to move within the gas introducing space.

In a sixth aspect, in the pretensioner device according to any one of the first to fifth aspects, an intermediate plate including a fourth through hole portion is provided between the blocking end portion and the elastic seal member, the fourth through hole portion being smaller than the first through hole portion and allowing the coupling member to pass therethrough.

In a seventh aspect, in the pretensioner device according to any one of the first to sixth aspects, the coupling member includes a plurality of wires bundled, and the first through hole portion of the blocking end portion or the fourth through hole portion of the intermediate plate to be provided in contact with the blocking end portion is formed to have a shape and a size corresponding to the shape and the size of the cross-section of the coupling member.

An eighth aspect relates to a seat belt device to be incorporated into an occupant seat of a vehicle, which includes webbing for restraining a passenger of a vehicle, a tongue plate mounted to the webbing, a buckle configured to be coupled to and released from the tongue plate, and the pretensioner device according to any one of the first to seventh aspects, in which the other end portion of the coupling member is coupled to a securing-side end portion of the webbing or the buckle.

### Effects of the Invention

According to the first aspect, the coupling member is drawn to the outside through the third through hole portion of the gas buffer member, the second through hole portion of the elastic seal member, and the first through hole portion of the blocking end portion, whereby the gas introduced into the gas introducing space is prevented from leaking to the outside through the through hole of the coupling member. Further, the elastic seal member is sandwiched between the gas buffer member and the blocking end portion, and the third through hole portion having a shape and a size corresponding to the shape and size of the cross-section of the coupling member is formed in the gas buffer member, whereby the gas introduced into the gas introducing space is unlikely to be sprayed directly onto the elastic seal member. This prevents the elastic seal member from deforming excessively, and the pressure retaining property can be improved.

According to the second aspect, the third through hole portion can be made as small as possible. This more reliably prevents the elastic seal member from deforming excessively, and the pressure retaining property can be improved further.

According to the third aspect, the gas buffer member can prevent the gas introduced into the gas introducing space from being sprayed directly onto the coupling member while preventing the elastic seal member from deforming excessively.

According to the fourth aspect, the elastic seal member can be prevented from deforming excessively with a simple configuration including a plate member.

According to the fifth aspect, the gas introduced into the gas introducing space can be prevented from being sprayed directly onto the coupling member.

According to the sixth aspect, the force caused when the elastic seal member pushed by gas comes into contact with the blocking end portion side can be dispersed and received by the intermediate plate, and the elastic seal member can be more reliably prevented from deforming excessively.

According to the seventh aspect, the contact area between the blocking end portion and the elastic seal member is increased, which more reliably prevents the elastic seal member from deforming excessively.

According to the eighth aspect, the seat belt device including the pretensioner device in which the elastic seal member is prevented from deforming excessively and the pressure retaining property is improved can be obtained.

### Brief Description of Drawings

FIG. 1 is a schematic side view showing an example of the state in which a seat belt device is incorporated into an occupant seat.
FIG. 2 is a schematic side view showing another example showing the state in which the seat belt device is incorporated into the occupant seat.
FIG. 3 is a side view showing a pretensioner device.
FIG. 4 is a plan view showing a pretensioner device 20.
FIG. 5 is a cross-sectional view taken along a line V-V of FIG. 3.
FIG. 6 is an exploded perspective view of the pretensioner device.
FIG. 7 is a partially enlarged view of FIG. 6.
FIG. 8 is a view explaining the overall operation of the pretensioner device.
FIG. 9 is another view explaining the overall operation of the pretensioner device.
FIG. 10 is a view conceptually showing a path of a gas introduced into a gas introducing space.
FIG. 11 is another view conceptually showing the path of the gas introduced into the gas introducing space.
FIG. 12 is still another view conceptually showing the path of the gas introduced into the gas introducing space.
FIG. 13 is a view showing a comparative example.
FIG. 14 is a view conceptually showing a path of a gas introduced into a gas introducing space in the comparative example.
FIG. 15 is another view conceptually showing the path of the gas introduced into the gas introducing space in the comparative example.
FIG. 16 is still another view conceptually showing the path of the gas introduced into the gas introducing space in the comparative example.
FIG. 17 is a view showing a variation.
FIG. 18 is a view showing another variation.
FIG. 19 is a view showing still another variation.
FIG. 20 is a view conceptually showing a path of a gas introduced into a gas introducing space in the variation.
FIG. 21 is a view conceptually showing a path of a gas introduced into a gas introducing space in the another variation.
FIG. 22 is a view conceptually showing a path of a gas introduced into a gas introducing space in the still another variation.

### Embodiment for Carrying Out the Invention

Hereinafter, a pretensioner device and a seat belt device including the pretensioner device according to an embodiment are described.

### <Overall configuration of seat belt device>

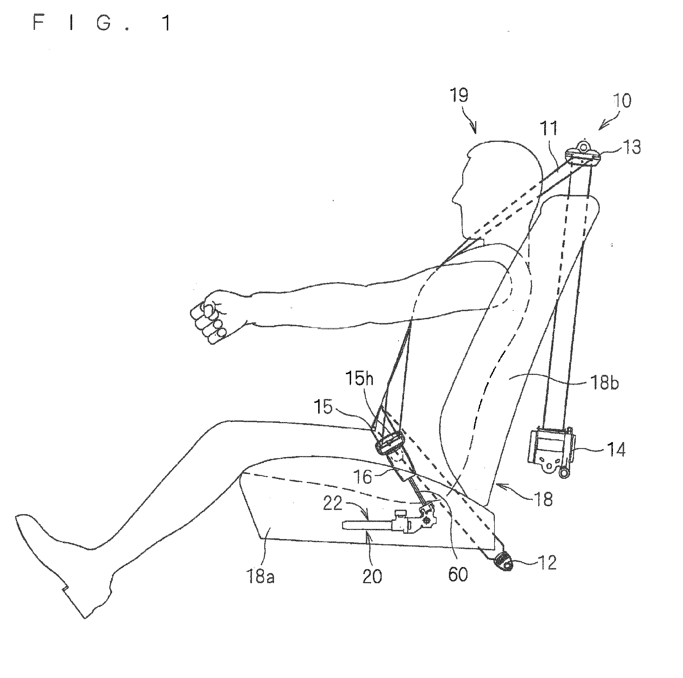

First, the overall configuration of the seat belt device is described. FIG. 1 is a schematic side view showing the state in which a seat belt device 10 is incorporated into an occupant seat 18.

The occupant seat 18 is mounted onto vehicles such as automobiles and includes a seat 18a and a back 18b, which is configured such that an occupant 19 can be seated on the seat 18a so as to lean against the back 18b. Typical examples of the occupant seat 18 include a driver's seat, passenger seat, and rear seat of an automobile.

The seat belt device 10 is configured to restrain the occupant 19 seated on the occupant seat 18 in a seated position.

That is, the seat belt device 10 includes webbing 11, a tongue plate 15, a buckle 16, and a pretensioner device 20.

The webbing 11 is formed as a long belt-like member of a flexible fabric or the like. One end of the webbing 11 is secured to, for example, a vehicle floor via an anchor 12. The other end side portion of the webbing 11 is coupled to a retractor device 14 secured to one side portion of the back 18b through a webbing guide 13 secured to a portion in the vicinity of the shoulder of the occupant 19. The retractor device 14 is configured for winding and accommodating the other end portion of the webbing 11 such that the other end portion of the webbing 11 is wound thereby and drawn therefrom.

The tongue plate 15 and the buckle 16 are configured so as to be coupled to each other and released from each other when a lock mechanism incorporated on the buckle 16 side is disengageably engaged with the tongue plate 15. Normally, the tongue plate 15 and the buckle 16 are locked to be coupled to each other when the tongue plate 15 is inserted into the buckle 16, while the lock therebetween is released when a release button provided to the buckle 16 is pressed. The configurations of the tongue plate 15 and buckle 16 per se are achieved by various configurations including well-known structures.

Formed in the tongue plate 15 is an insertion hole 15h through which the webbing 11 can be inserted. If the webbing 11 is inserted through the insertion hole 15h, the tongue plate 15 is movably mounted to the webbing 11. The buckle 16 is coupled and secured to the vehicle floor or the like via the pretensioner device 20.

Then, the webbing 11 is drawn from the retractor device 14 such that the tongue plate 15 is coupled to the buckle 16 in the state in which the occupant 19 is seated on the occupant seat 18, whereby the webbing 11 can be disposed along a path diagonally extending from one shoulder of the occupant 19 to one hip through the portion in front of the chest and a path extending from one hip to the other hip through the portion in front of the hips. The webbing 11 disposed as described above restrains the occupant 19 in a seated position. When the coupled state between the tongue plate 15 and the buckle 16 is released, the retractor device 14 winds up the webbing 11, so that the occupant can smoothly sit on the occupant seat 18 or rise from the occupant seat 18.

The pretensioner device 20 is secured to the vehicle floor or the like and is coupled to the buckle 16. The pretensioner device 20 is configured to pull the webbing 11 by withdrawing the buckle 16 in, for example, sudden deceleration of a vehicle, and removes the slack of the webbing 11, to thereby effectively restrain the occupant 19.

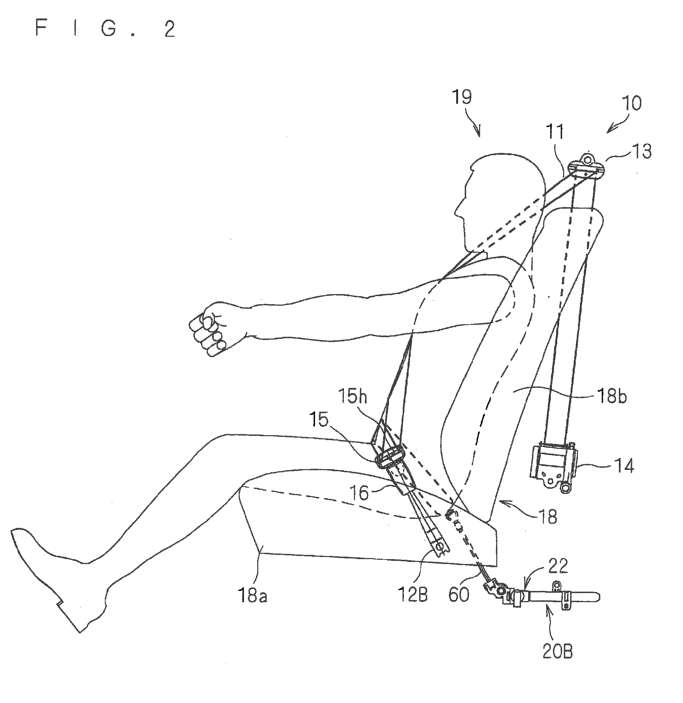

Needless to say, as in a variation shown in FIG. 2, the buckle 16 may be secured to the vehicle floor or the like via an anchor 12B, and one end portion thereof being the securing end portion of the webbing 11 may be secured to the vehicle floor or the like via a pretensioner device 20B secured to the vehicle floor or the like.

Also in this case, the pretensioner device 20B withdraws one end portion of the webbing 11 and pulls the webbing 11 in, for example, sudden deceleration of a vehicle, and the slack of the webbing 11 is removed, to thereby effectively restrain the occupant 19. One having a similar configuration to that of the pretensioner device 20 can be used for the pretensioner device 20B in this case.

### <Configuration of pretensioner device>

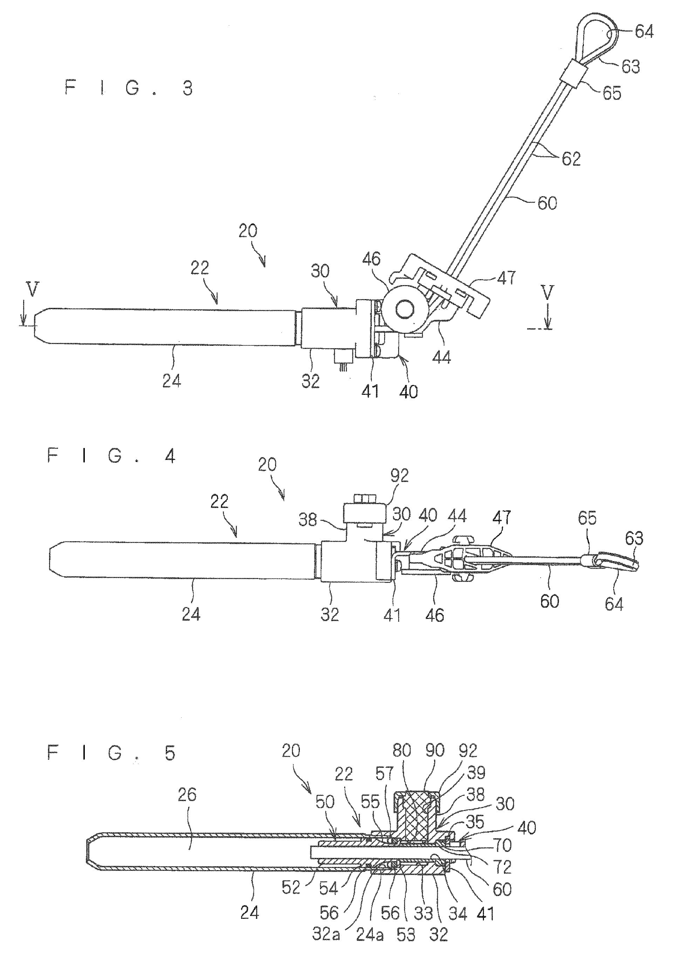

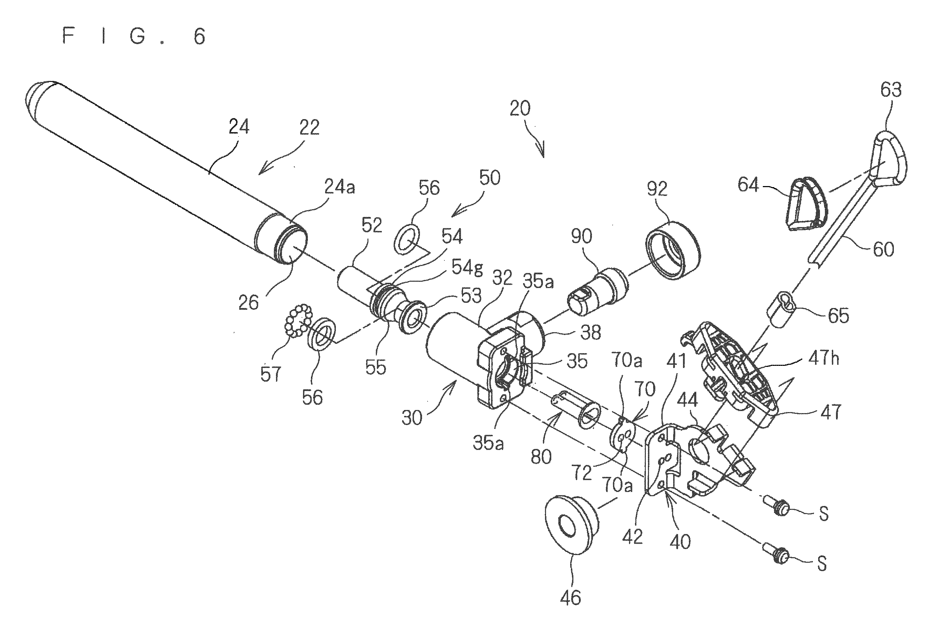

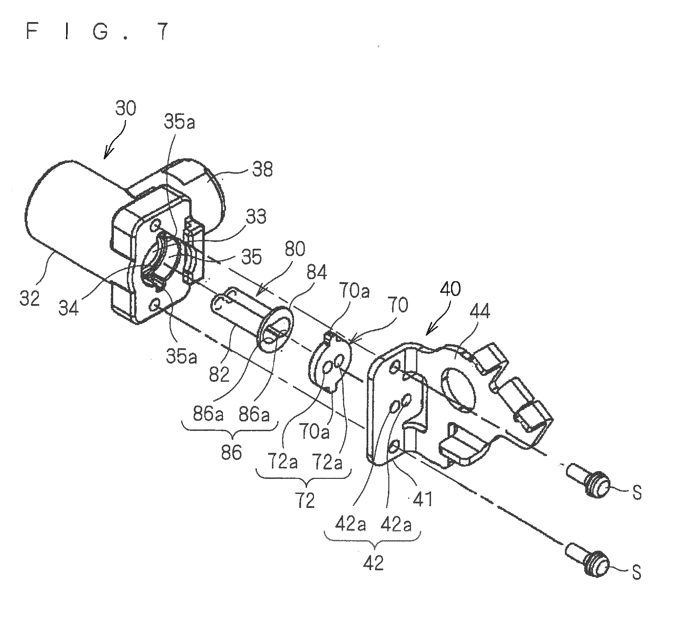

The pretensioner device 20 is described. FIG. 3 is a side view showing the pretensioner device 20, FIG. 4 is a plan view showing the pretensioner device 20, FIG. 5 is a cross-sectional view taken along a line V-V of FIG. 3, FIG. 6 is an exploded perspective view of the pretensioner device 20, and FIG. 7 is a partially enlarged view of FIG. 6.

The pretensioner device 20 includes a pretensioner main body 22, a piston 50, a coupling member 60, an elastic seal member 70, a gas buffer member 80, and a gas generator 90.

The pretensioner main body 22 includes a cylinder member 24, a housing member for gas supply 30, and a lid member 40, and has a long rod-like appearance in its entirety.

The cylinder member 24 is formed of metal or the like as a cylindrical member. Formed inside the cylinder member 24 is a cylindrical space 26 that extends along the longitudinal direction thereof and has a cylindrical shape. One end portion of the cylinder member 24 is open outwardly, and a thread groove 24a for coupling and securing with the housing member for gas supply 30 is formed on the outer perimeter of the one end portion of the cylinder member 24. The other end portion of the cylinder member 24 is open outwardly while becoming slightly narrower toward the tip.

The housing member for gas supply 30 is a member formed of metal or the like and includes a housing main body 32 and a gas supply 38.

The housing main body 32 is formed into a cylindrical shape having substantially the same diameter as that of the cylinder member 24, and inside thereof, a cylindrical gas introducing space 33 is formed along the longitudinal direction thereof. Here, the gas introducing space 33 is formed to have a (slightly) smaller inner diameter than that of the cylindrical space 26, and a gas from the gas generator 90 described below is introduced into the gas introducing space 33. The gas introducing space 33 is not necessarily required to have a cylindrical shape.

Formed at one end portion of the gas introducing space 33, that is, at the one end portion of the housing main body 32 is a cylindrical sealing space 35. The sealing space 35 is provided in the portion on the opposite side to the cylindrical space 26 in the gas introducing space 33. Formed in the inner peripheral portion on the gas introducing space 33 side of the sealing space 35 is an annular projection 34 projecting inwardly into an annular shape. An elastic seal member 70 disposed in the sealing space 35 prevents gas leakage from the gas introducing space.

Formed in the other-end inner peripheral portion of the housing main body 32 is a thread groove 32a that can be screwed with the thread groove 24a. The cylinder member 24 and the housing member for gas supply 30 are linearly integrated with each other by screwing of the thread groove 24a of the cylinder member 24 and the thread groove 32a of the housing main body 32, whereby the gas introducing space 33 is disposed to linearly connect with one end portion of the cylindrical space 26.

The gas supply 38 is formed so as to project from one side portion of the housing main body 32. Formed in the gas supply 38 is a gas supply port 39 that connects with the inside of the gas introducing space 33, and the gas generator 90 is incorporated into the gas supply 38. Then, the gas generated by the gas generator 90 is supplied from the gas supply port 39 to the gas introducing space 33.

The lid member 40 is a member formed by, for example, pressing a metal plate and includes a lid main body 41 and a mounting support 44.

The lid main body 41 is formed into a plate shape having a size enough to block one-side opening of the housing main body 32, here, into a rectangular plate shape. The lid main body 41 is secured to one end surface of the housing main body 32 by, for example, the securing structure using screws S. In this secured state, the lid main body 41 is used as a blocking end portion that blocks the gas introducing space 33 on the side opposite to the cylindrical space 26. Formed in the lid main body 41 is a first through hole portion 42. The first through hole portion 42 is formed into a hole shape through which the coupling member 60 can pass. It is preferable that the first through hole portion 42 be formed into a hole shape having a shape and a size corresponding to the shape and size of the cross-section of the coupling member 60. In other words, it is preferable that the gap between the outer periphery of the coupling member 60 and the first through hole portion 42 be formed to be as small as possible in such a range that the coupling member 60 can pass through the first through hole portion 42 without any problem in terms of the operation as the pretensioner device 20. It is assumed here that a plurality of (two) wires 62 are used as the coupling member 60 as described below. Accordingly, the first through hole portion 42 is configured such that a plurality of holes 42a through which the plurality of (two) wires 62 can respectively pass are formed in a separate manner (more specifically, such a manner that they are close to each other as separate holes; see FIG. 7). The first through hole portion 42 may be formed into a shape in which a plurality of holes through which the wires 62 can pass connect with each other, that is, a shape in which an oval is constricted in the middle. In a case where the coupling member 60 is one wire 62, it suffices that the first through hole portion 42 has a hole shape as small as possible correspondingly to the wire 62. Needless to say, it is not necessarily required that the first through hole portion 42 be formed into a hole shape having a shape and a size corresponding to the shape and size of the cross-section of the coupling member 60, which may be formed into a hole shape much larger than the coupling member 60.

The mounting support 44 extends to the outside in a position substantially orthogonal to the lid main body 41. A disk-shaped guide body 46 is mounted to the mounting support 44. The coupling member 60 guided to the outside through the first through hole portion 42 is guided so as to bend at the guide body 46. Mounted to the mounting support 44 is a stopper member 47 having a guide hole 47h into which the coupling member 60 can be inserted. The coupling member 60 bent by the guide body 46 is further drawn to the outside through the guide hole 47h of the stopper member 47. The stopper member 47 serves to prevent the coupling member 60 having a length more than needed from being withdrawn, by interfering with a coupling annular portion 63 at the end portion of the coupling member 60 when the coupling member 60 is withdrawn into the pretensioner main body 22.

The lid member 40 may be configured to include only a portion for use as the blocking end portion. While the present embodiment has described the configuration in which the pretensioner main body 22 is divided into the cylinder member 24, the housing member for gas supply 30, and the lid member 40, part or the whole thereof may be configured as one member or may be divided into a larger number of parts.

The gas generator 90 includes an ignition and a gas generant and is secured by a cap 92 or the like in the state of being disposed in the gas supply 38. The gas generator 90 is configured such that the gas generant is ignited and burned by the ignition in response to, for example, an ignition order signal from an impact detector or the like installed in the vehicle per se, to thereby generate gas. The gas generated by the gas generator 90 is supplied from the gas supply port 39 into the gas introducing space 33.

The piston 50 is disposed so as to move within the cylindrical space 26 and is configured to, if gas is supplied into the introducing space 33, be pushed and moved from one end of the cylindrical space toward the other end thereof by a gas pressure thereof.

More specifically, the piston 50 includes a piston main body 52, two elastic rings 56, and spheres 57 as a stopper (see FIGS. 5, 6, and 10).

The piston main body 52 is a member formed of metal or the like and is formed as a cylindrical member in which the coupling member 60 can be disposed. Formed at one end portion of the piston main body 52 is a flanged portion 53. The outer diameter of the flanged portion 53 is set to have such a size that the gap between the outer periphery thereof and the inner peripheral surface of the cylindrical space 26 can be made as small as possible in such a range that the piston 50 is not hindered from moving. Formed at the middle portion in the longitudinal direction of the piston main body 52 is a mid-sized diameter portion 54. The mid-sized diameter portion 54 is set to have such a size that the gap between the outer periphery thereof and the inner peripheral surface of the cylindrical space 26 can be made as small as possible in such a range that the piston 50 is not hindered from moving. The portion between the flanged portion 53 and the mid-sized diameter portion 54 is formed as a tapered peripheral surface 55b that has a gradually decreasing diameter from the mid-sized diameter portion 54 toward the flanged portion. The one elastic ring 56 is fitted onto the thinnest part on the flanged portion 53 side of the tapered peripheral surface 55. The other elastic ring 56 is fitted onto an annular groove 54g formed in the mid-sized diameter portion 54. The elastic rings 56 are formed of elastically deformable materials, and prevent gas leakage between the outer peripheral surface of the piston main body 52 and the inner peripheral surface of the cylindrical space 26. The spheres 57 are annually disposed around the tapered peripheral surface 55. When the piston 50 moves toward the other end side (left in FIG. 5) within the cylindrical space 26 by an introduced gas pressure in the state in which the piston 50 is disposed in the cylindrical space 26, the spheres 57 are located in the place (right in FIG. 5) dented most around the tapered peripheral surface 55 and do not hinder the piston 50 from moving. Meanwhile, when the piston 50 moves toward one end side (right in FIG. 5) within the cylindrical space 26, the spheres 57 come into contact with the inner peripheral surface of the cylindrical space 26, whereby the spheres 57 move around the tapered peripheral surface 55 relative thereto toward the location dented by a relatively small amount (location on the left in FIG. 5). As a result, the spheres 57 are sandwiched between the inner peripheral surface of the cylindrical space 26 and the tapered peripheral surface 55, to thereby prevent the piston 50 from moving. That is, the spheres 57 function as a directional stopper that allows the piston 50 to move only toward the other end side of the pretensioner main body 22.

The coupling member 60 is a long member that can be deformed by bending. Here, the coupling member 60 is formed by bundling two metal wires 62. Here, the coupling member 60 is configured by folding back one wire before process such that two wires 62 are bundled after process. Needless to say, the coupling member 60 may be one wire also after process or may be configured by bundling a larger number of wires. Needless to say, the configuration in which the coupling member 60 is formed by bundling the plurality of wires 62 tends to achieve both pliability and strength. One end portion of the coupling member 60 is inserted through the piston main body 52 and is secured by, for example, cramping to be coupled and secured to the piston 50. The coupling member 60 extends toward the gas introducing space 33 side of the piston 50, and is guided to the outside of the one end of the pretensioner main body 22 through the gas introducing space 33 (including the sealing space 35) and the first through hole portion 42. Then, the coupling member 60 is bent by the guide body 46 to divert its direction toward the webbing 11 or buckle 16 side, and is drawn obliquely upward through the guide hole 47h further. Meanwhile, at the other end portion of the coupling member 60, the folded-back portion of the wire 62 forms the coupling annular portion 63. Provided in the inner peripheral portion of the coupling annular portion 63 is a ferrule 64. In the state in which the coupling annular portion 63 is fitted into the outer peripheral groove of the ferrule 64, a metal sleeve member 65 is secured by cramping to the root portion of the coupling annular portion 63. This enables the coupling annular portion 63 to keep an annular shape more reliably.

The elastic seal member 70 is provided on the inner surface side of the lid main body 41 being the blocking end portion. Here, the elastic seal member 70 is disposed in the sealing space 35 of the gas introducing space 33, to thereby be provided on the inner surface side of the lid main body 41. The elastic seal member 70 is formed of an elastic material that deforms more easily than the surrounding housing member for gas supply 30, lid member 40, and the like. As the elastic material described above, an elastomer such as, for example, an ethylene propylene diene monomer (EPDM) or a silicon rubber may be used. As the elastic seal member 70, for example, a member having an EPDM hardness of 80 HS (Shore hardness) may be used. The elastic seal member 70 is formed into a plate shape having a uniform thickness. Here, the elastic seal member 70 is formed into a disk shape having a shape and a size corresponding to those of the sealing space 35. It is preferable that the elastic seal member 70 be formed to have such shape and size as to entirely block the sealing space 35 in terms of sealing the sealing space more reliably, which is not necessarily required. In a case where the sealing space has an oval hole shape, a square hole shape, or the like, the elastic seal member 70 may be formed into an oval plate shape or a square plate shape correspondingly to the above-mentioned shape. Further, a second through hole portion 72 through which the coupling member 60 can pass is formed in the elastic seal member 70. Similarly to the first through hole portion 42, the second through hole portion 72 is also formed to have a shape and a size corresponding to the shape and size of the cross-section of the coupling member 60. In other words, in the present embodiment, the second through hole portion 72 is configured such that a plurality of holes 72a through which the plurality of (two) wires 62 can pass are formed in a separate manner (more specifically, in such a manner that they are close to each other as separate holes, see FIG. 7). In a case where the coupling member 60 is one wire 62, it suffices that the second through hole portion 72 has a hole shape as small as possible correspondingly to the wire 62. It is preferable that the second through hole portion 72 be formed into a hole shape having a shape and a size corresponding to the shape and size of the cross-section of the coupling member 60, which is not necessarily required as in the case of the first through hole portion 42. The first through hole portion 42 and the second through hole portion 72 may have the same shape and size.

At least one (here, two) raised portion 70a is formed on the outer periphery of the elastic seal member 70. The raised portions 70a are fitted into a recessed groove 35a formed on the outer periphery of the sealing space 35 (see FIG. 7), to thereby regulate the rotation within the sealing space 35.

The gas buffer member 80 is provided at such a position as to sandwich the elastic seal member 70 between the lid main body 41 and itself. Here, the gas buffer member 80 includes a tubular portion 82 and a flanged portion 84 (particularly, see FIG. 7). The tubular gas buffer member 80 having some length in its entirety is also referred to as a collar.

The tubular portion 82 is formed into a cylindrical shape movably covering the coupling member 60 that passes through the gas introducing space 33. More specifically, the tubular portion 82 is formed into a tubular shape having a length dimension enough to extend from the sealing space 35 of the gas introducing space 33 to one end of the cylinder member 24 coupled to the housing member for gas supply 30.

The flanged portion 84 is formed into such a shape as to project from one end portion of the tubular portion 82 toward the entire outer peripheral portion thereof. The flanged portion 84 is formed into an annular shape corresponding to the inner periphery of the sealing space 35. The flanged portion 84 covers the outer peripheral portion of the elastic seal member 70 almost entirely on the outer perimeter of the tubular portion 82.

Formed in the gas buffer member 80 is a third through hole portion 86 passing through the tubular portion 82 and the flanged portion 84. The third through hole portion 86 is formed to have a shape and a size corresponding to the shape and size of the cross-section of the coupling member 60. In other words, it is preferable that the third through hole portion 86 be formed such that the gap between the outer periphery of the coupling member 60 and the third through hole portion 86 is made as small as possible in such a range that the coupling member 60 can pass through the third through hole portion 86 without any problem in terms of the operation as the pretensioner device 20. Here, the third through hole portion 86 is formed into a shape in which a plurality of (two) holes 86a through which the plurality of (two) wires 62 can respectively pass connect with each other, that is, a shape in which an oval is constricted in the center portion in the longitudinal direction. Needless to say, a plurality of holes through which the plurality of wires 62 can respectively pass may be formed in a separate manner (more specifically, in such a manner that they are close to each other as separate holes), similarly to the first through hole portion 42 and the second through hole portion 72. In a case where the coupling member 60 is one wire 62, it suffices that the third through hole portion 86 has a hole shape as small as possible correspondingly to the wire 62. Alternatively, at least part of the holes formed in the gas buffer member 80 may be formed as a third through hole portion having the above-mentioned hole shape. The third through hole portion 86 may also be formed to have the same shape and size as those of the second through hole portion 72.

The gas buffer member 80 is disposed within the gas introducing space 33 in the state in which the flanged portion 84 is brought into surface contact with the surface of the elastic seal member 70, which faces the gas introducing space 33, within the sealing space 35 and the tubular portion 82 is caused to face the other end side (that is, cylinder member 24 side) of the gas introducing space 33 through the annular projection 34.

In the gas introducing space 33, the coupling member 60 is guided to pass through the third through hole portion 86 of the gas buffer member 80 and the second through hole portion 72 of the elastic seal member 70. In particular, in the gas introducing space 33, the coupling member 60 is covered with the tubular portion 82 of the gas buffer member 80 in the vicinity of the portion in which the gas supply port 39 is formed.

The gas buffer member 80 as described above is formed of a material having a higher heat resistance and a higher rigidity compared with the elastic seal member 70. More specifically, it suffices that the gas buffer member 80 is formed of metals such as iron, ceramics, or the like.

The operation of the pretensioner device 20 configured as described above is described.

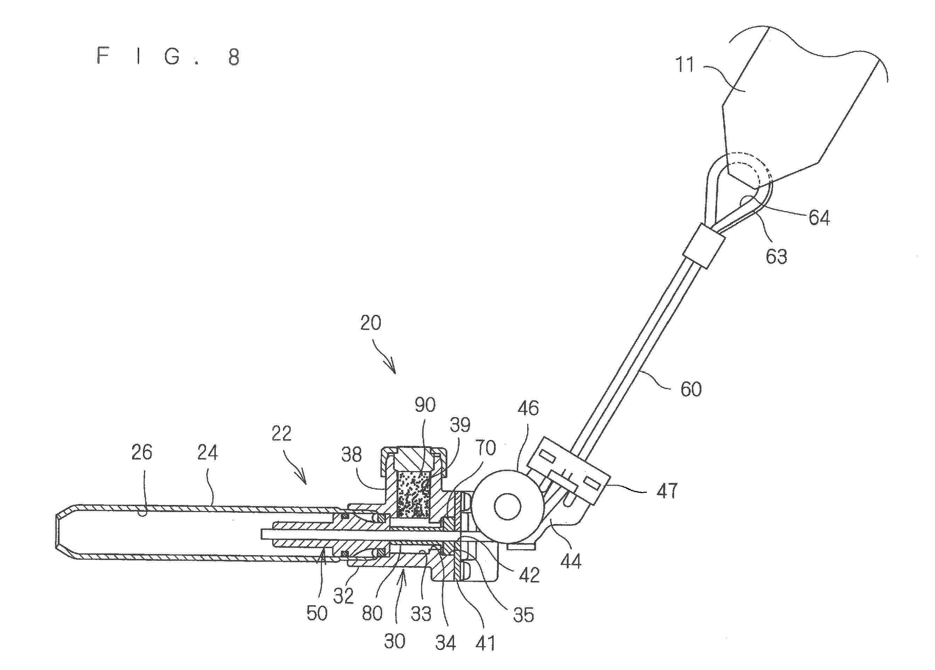

First, the overall operation of the pretensioner device 20 is described. In the initial state, as shown in FIG. 8, the piston 50 is disposed in the vicinity of the gas introducing space 33 in the cylindrical space 26. In this state, the piston 50 is in contact with the step portion between the cylindrical space 26 and the gas introducing space 33 and is prevented from moving toward the gas introducing space 33 side by the spheres 57. Accordingly, even if a tensile force is applied to the coupling member 60, the coupling member 60 is not drawn from the pretensioner device 20.

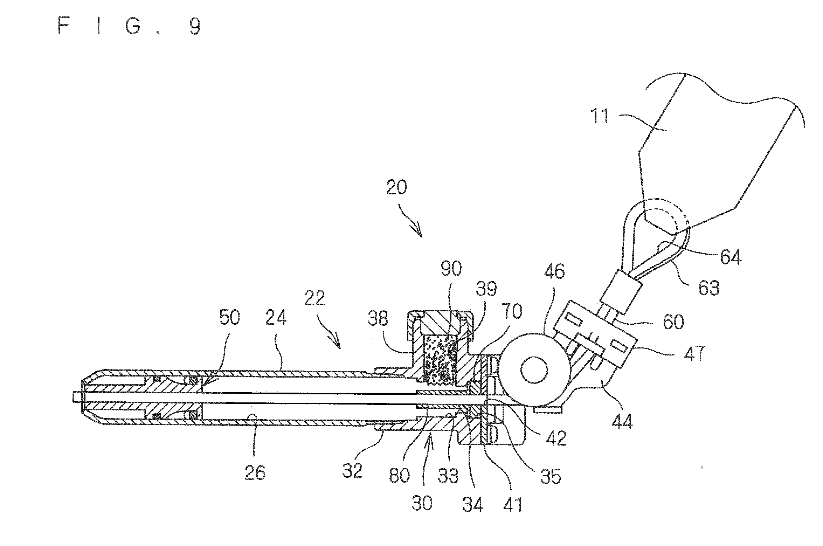

In this state, as shown in FIG. 9, the gas generator 90 generates a gas, whereby a high temperature and pressure gas is supplied into the gas introducing space 33 through the gas supply port 39. Then, the piston 50 is pushed toward the other end of the cylindrical space 26 by the gas pressure. As the piston 50 moves within the cylindrical space 26 toward the other end of the cylindrical space 26, the coupling member 60 is withdrawn into the pretensioner main body 22. Accordingly, the webbing 11 or the buckle 16 is pulled toward the pretensioner device 20 side, and the slack of the webbing 11 is removed, so that the occupant 19 is restrained effectively.

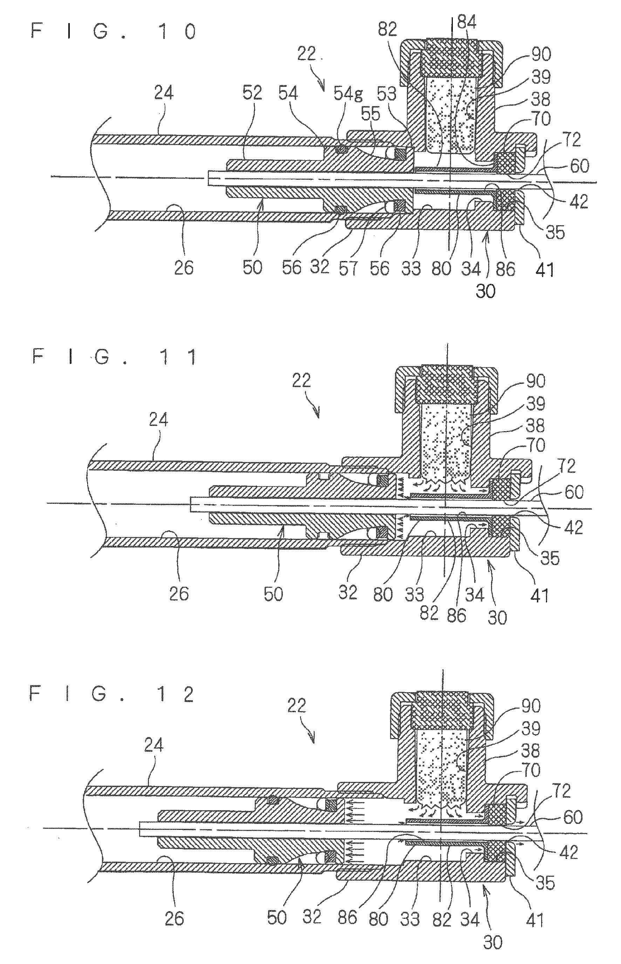

FIGS. 10 to 12 are views conceptually showing the path of the gas introduced into the gas introducing space 33. That is, when a gas is introduced, the state shown in FIG. 10 before the introduction of a gas changes to the state shown in FIG. 11, and further, to the state shown in FIG. 12. With reference to FIGS. 11 and 12, the gas introduced from the gas supply port 39 into the gas introducing space 33 flows into the portion in the vicinity of the tubular portion 82 of the gas buffer member 80, and one end portion of the piston 50 is pushed by the gas pressure. As a result, the piston 50 moves as described above.

A part of the gas also flows into the side opposite to the piston 50, but this gas is received by the flanged portion 84 of the gas buffer member 80. A part of the gas also attempts to flow into the gap between the tip of the tubular portion 82 and the coupling member 60. However, the third through hole portion 86 is formed to have a shape and a size corresponding to the shape and size of the cross-section of the coupling member 60, and thus, the gap between the third through hole portion 86 and the coupling member 60 is small. Accordingly, the gas is unlikely to flow into the gap between the tip of the tubular portion 82 and the coupling member 60. This mitigates the effects of the high temperature and pressure gas on the elastic seal member 70. That is, the thermal effects of gas are mitigated through the gas buffer member 80 and are transmitted to the elastic seal member 70. The pressure caused by a momentary influx of gas is received by the gas buffer member 80 once, is dispersed over the surface contact area between the gas buffer member 80 and the elastic seal member 70, and is transmitted to the elastic seal member 70. This prevents the local application of gas pressure. Therefore, the elastic seal member 70 is unlikely to deform excessively.

The coupling member 60 moves through the first through hole portion 42, the second through hole portion 72, and the third through hole portion 86, and thus, gaps therebetween are not sealed completely. Therefore, gas leakage through the gaps therebetween cannot be eliminated in its entirety. However, when the gas buffer member 80 is pushed forth by the gas pressure, the elastic seal member 70 is compressed between the gas buffer member 80 and the lid main body 41 and spreads in a planar manner within the sealing space 35. This enables to seal the portion between the elastic seal member 70 and the inner peripheral surface of and the sealing space 35 more reliably. Further, the second through hole portion 72 becomes smaller, and the inner peripheral surface of the second through hole portion 72 deforms in a direction in which it is pushed against the coupling member 60. As a result, a gas is sealed enough where there is no interference with the movement of the operation of piston 50. On this occasion, in a case where the coupling member 60 passes through the second through hole 72, the peripheral edge of the second through hole 72 is sandwiched between the gas buffer member 80 and the lid main body 41 even if the coupling member 60 and the inner peripheral surface of the second through hole 72 rub against each other. Accordingly, the elastic seal member 70 is prevented from, for example, deforming excessively.

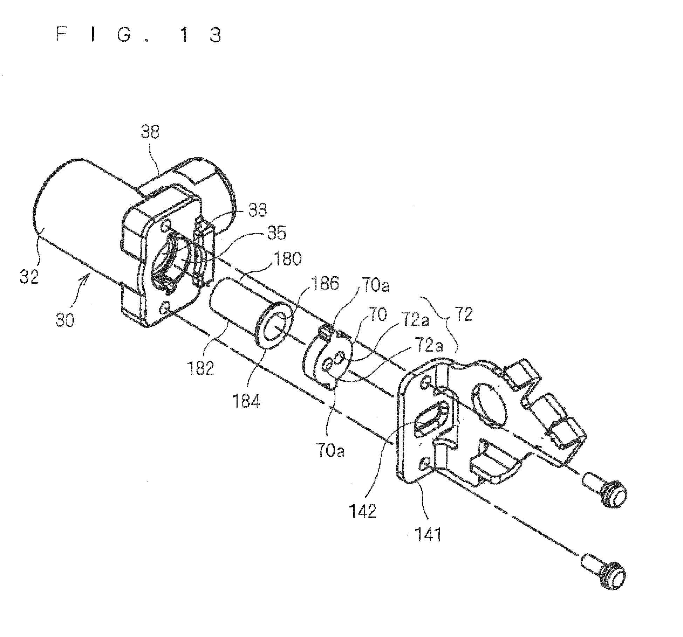

The operation in a case where the gas buffer member 80 is changed into a tubular member 180 described below as shown in FIG. 13 is described as a comparative example.

The tubular member 180 includes a tubular portion 182 and a flanged portion 184.

The tubular portion 182 is formed into a cylindrical shape that movably covers the coupling member 60 passing through the gas introducing space 33. In other words, the coupling member 60 is inserted into the tubular portion 182 so as to move within the gas introducing space 33.

The flanged portion 184 is formed into a shape projecting from one end of the tubular portion 182 toward the entire outer periphery thereof. The flanged portion 184 is formed into an annular shape corresponding to the inner peripheral portion of the sealing space 35. The flanged portion 184 covers the outer peripheral portion of the elastic seal member 70 almost entirely on the outer perimeter of the tubular portion 82.

A through hole 186 is formed in the tubular member 180 in place of the third through hole portion 86. The through hole 186 is relatively large irrespective of the size, shape, and the like of the cross-section of the coupling member 60, which is formed into a circular hole shape in this case.

A first through hole portion 142 having a slot shape is formed in place of the first through hole portion 42 in a lid main body 141 equivalent to the lid main body 41. The configuration except for the above is as in the first embodiment described above.

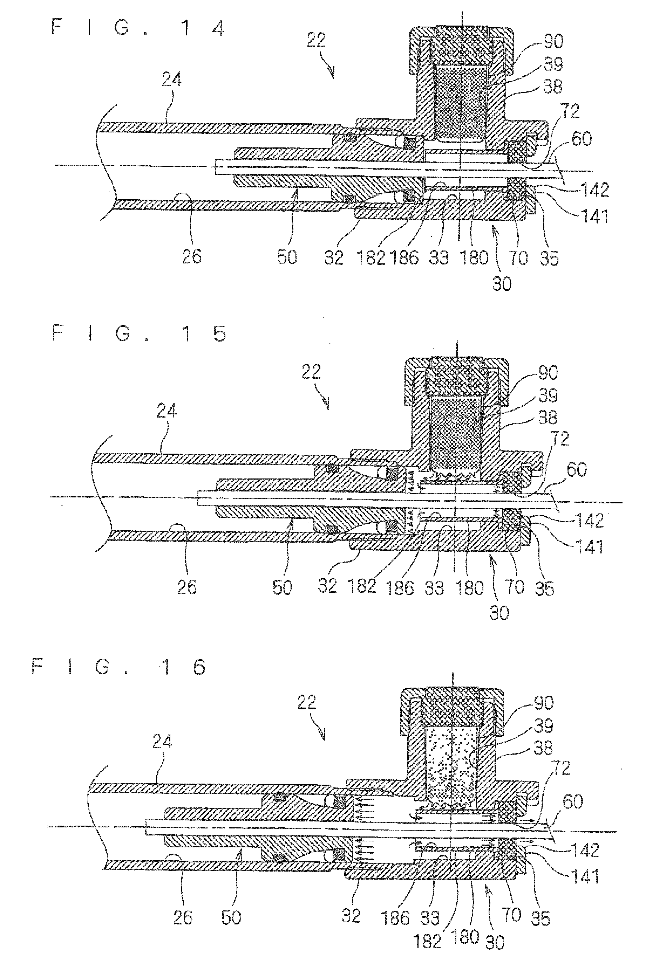

FIGS. 14 to 16 are views conceptually showing the path of the gas introduced into the gas introducing space 33 in the case of the comparative example.

That is, when a gas is introduced, the state shown in FIG. 14 before the introduction of a gas changes to the state shown in FIG. 15, and further, to the state shown in FIG. 16. As shown in FIGS. 15 and 16, a part of the gas introduced into the gas introducing space 33 from the gas supply port 39 flows into the opening on the tip side of the tubular member 180 and then flows into the gap between the through hole 186 and the coupling member 60. The gas that has flowed into the through hole 186 further flows into the elastic seal member 70. As a result, the elastic seal member 70 is exposed more directly to the high temperature and pressure gas, whereby the limited portion around the coupling member 60 in the elastic seal member 70 experiences the force due to the gas pressure while being thermally affected in a direct manner.

According to the pretensioner device 20 and seat belt device 10 configured as described above, the coupling member 60 is drawn to the outside of the pretensioner main body 22 through the third through hole portion 86 of the gas buffer member 80, the second through hole portion 72 of the elastic seal member 70, and the first through hole portion 42 of the lid main body 41. Accordingly, the gas introduced into the gas introducing space 33 can be prevented from leaking to the outside through the through holes for the coupling member 60. In particular, gas leakage is prevented by the second through hole portion 72 of the elastic seal member 70. In addition, the elastic seal member 70 is sandwiched between the gas buffer member 80 and the lid main body 41, and the third through hole portion 86 having a shape and a size corresponding to the shape and size of the cross-section of the coupling member 60 is formed in the gas buffer member 80. Accordingly, the elastic seal member 70 is covered and protected by the gas buffer member 80 on the gas introducing space 33 side as entirely as possible. Therefore, the gas introduced into the gas introducing space 33 is unlikely to be sprayed directly onto the elastic seal member 70. This prevents the elastic seal member 70 from deforming excessively. Further, this enables to use a material easily deformable to a large extent as the elastic seal member 70, whereby sealing property (pressure retaining property) can be improved.

Moreover, the third through hole portion 86 is obtained by forming a plurality of holes 86a, into which the wires 62 can be respectively inserted, in a connecting manner or separate manner, whereby the third through hole portion 86 can be made as small as possible in such a range that the wire 62 can pass therethrough. Accordingly, the elastic seal member 70 can be more unlikely to be exposed to a high temperature and pressure gas, which enables to prevent the elastic seal member 70 from deforming more reliably.

The gas buffer member 80 includes the tubular portion 82 covering the coupling member 60 within the gas introducing space 33, and thus, the gas supplied into the gas introducing space 33 is unlikely to be sprayed directly onto the coupling member 60. This enables to prevent the elastic seal member 70 from deforming excessively and prevent the gas from being sprayed directly onto the coupling member 60 with a relatively low part count.

The first through hole portion 42 is formed to have a shape and a size corresponding to the shape and size of the cross-section of the coupling member 60, and thus, the lid main body 41 and the elastic seal member 70 can be brought into surface contact with each other in a relatively large area. Accordingly, in the state in which the elastic seal member 70 is pushed (that is, the state in which the elastic seal member 70 is sandwiched between the lid main body 41 and the gas buffer member 80), the force with which the lid main body 41 receives the elastic seal member 70 can be dispersed, which prevents the local concentration of force. Also in this respect, the elastic seal member 70 can be prevented from deforming excessively.

In particular, the first through hole portion 42 is configured such that the plurality of holes 42a into which the wires 62 are respectively inserted are formed in a connecting manner or a separate manner, whereby the above-mentioned effect becomes more conspicuous. Needless to say, the first through hole portion 42 is not necessarily required to be formed into the above-mentioned shape and may be just a slot.

It is not necessarily required to use the gas buffer member 80 in which the third through hole portion 86 is formed and to use the lid main body 41 in which the first through hole portion 42 is formed.

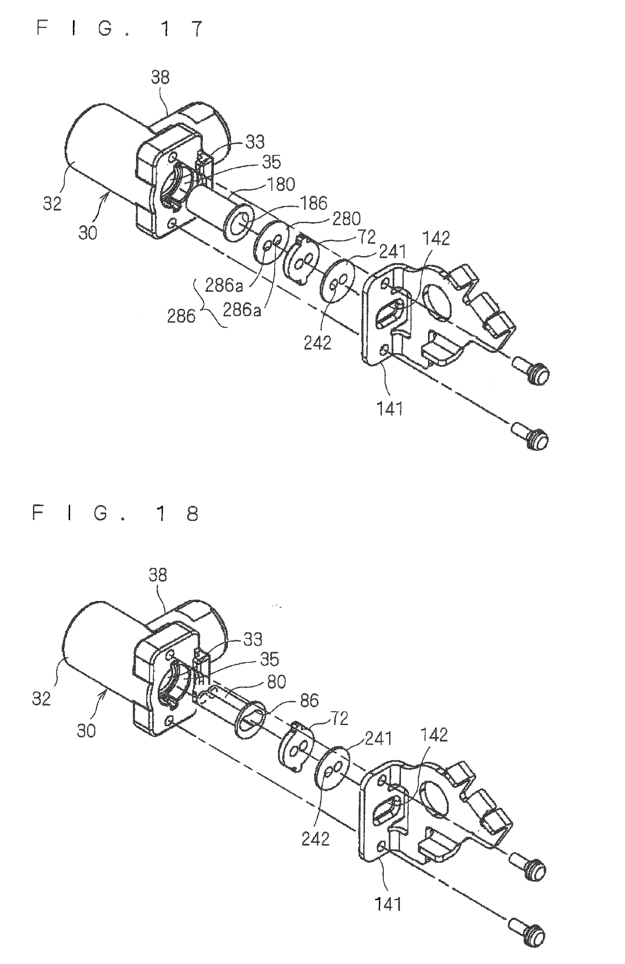

For example, in the embodiment described above, a plate-like gas buffer member 280 and the tubular member 180 may be used in place of the gas buffer member 80 and an intermediate plate 241 and the lid main body 141 may be used in place of the lid main body 41, as in the variation shown in FIG. 17.

That is, the gas buffer member 280 is formed into a plate shape having a uniform thickness. Here, the gas buffer member 280 is formed into a circular plate shape corresponding to the shape and size of the sealing space 35. In order to cover the elastic seal member 70 more reliably and be brought into surface contact with the gas buffer member 280 in an area as large as possible, it is preferable that the gas buffer member 280 be formed to have the same shape and size as those of the elastic seal member 70. In a case where the sealing space has an oval hole shape, a square hole shape, or the like, the gas buffer member 280 may be formed into an oval plate shape or a square plate shape correspondingly to the above-mentioned shape. Similarly to the third through hole portion 86, a third through hole portion 286 having a shape and a size corresponding to the shape and size of the cross-section of the coupling member 60 is formed in the gas buffer member 280. In the present embodiment, the third through hole portion 286 is configured such that a plurality of holes 286a through which the plurality of (two) wires 62 can respectively pass are formed in a separate manner (more specifically, in such a manner that they are close to each other as separate holes). The third through hole portion 286 may be formed into a shape in which a plurality of holes through which the wires 62 can respectively pass connect with each other, that is, a shape in which an oval is constricted in the center portion in the longitudinal direction. In a case where the coupling member 60 is one wire 62, it suffices that the third through hole portion 286 has a hole shape as small as possible correspondingly to the wire 62. The gas buffer member 280 is formed of a material having a higher heat resistance and a higher rigidity compared with the elastic seal member 70. More specifically, it suffices that the gas buffer member 280 is formed of metals such as iron, ceramics, or the like.

The tubular member 180 has a similar configuration to that described in the comparative example above, and the lid main body 141 has a similar configuration to that described in the comparative example above.

The intermediate plate 241 is a plate member provided between the lid main body 141 as a blocking end portion and the elastic seal member 70. The intermediate plate 241 has a similar configuration to that of the gas buffer member 280, in which a fourth through hole portion 242 having the same configuration as that of the third through hole portion 286 is formed. The fourth through hole portion 242 is smaller than the first through hole portion 142 having a slot shape formed in the lid main body 141.

The elastic seal member 70 is sandwiched between the gas buffer member 280 and the intermediate plate 241 in the sealing space 35, and the laminate thereof is sandwiched between the flanged portion 184 of the tubular member 180 and the lid main body 141.

Alternatively, in the embodiment above, the intermediate plate 241 and the lid main body 141 may be used in place of the lid main body 41 and the gas buffer member 80 may be used as it is, as in a variation shown in FIG. 18.

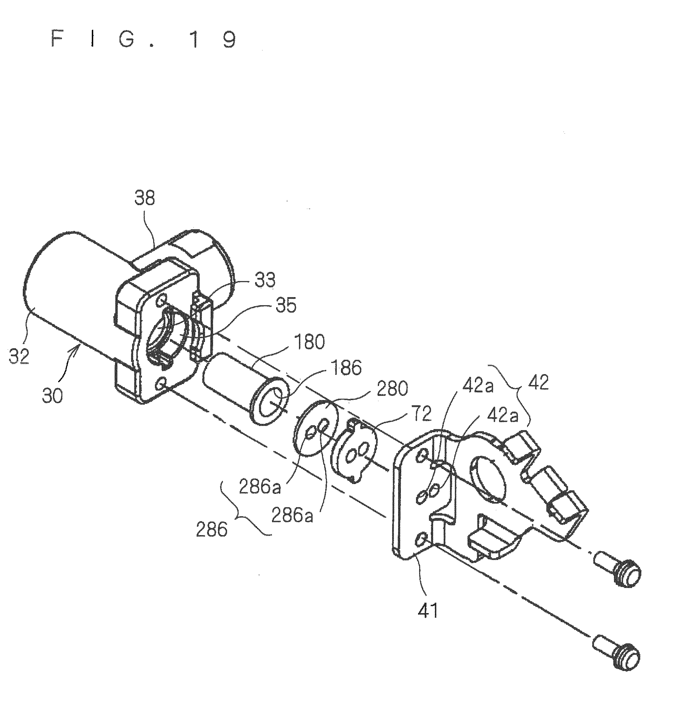

Still alternatively, in the embodiment above, the plate-like gas buffer member 280 and the tubular member 180 may be used in place of the gas buffer member 80 and the lid main body 41 may be used as it is, as in a variation shown in FIG. 19.

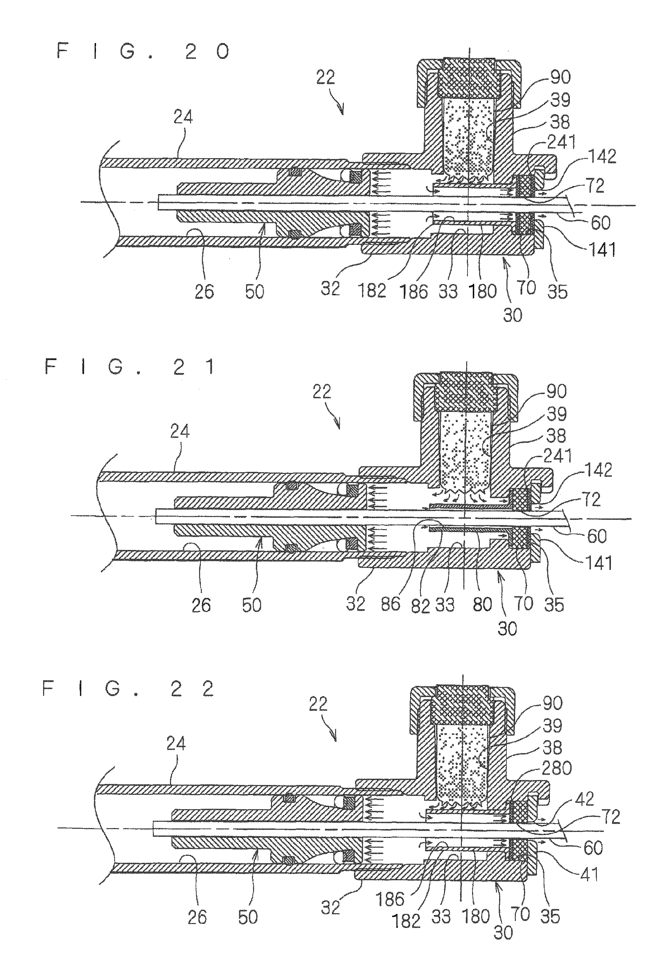

In a case of the variation shown in FIG. 17, the gas buffer member 280 can prevent the elastic seal member 70 from being exposed directly to a high temperature and pressure gas as shown in FIG. 20. Accordingly, as in the embodiment above, the elastic seal member 70 can be prevented from deforming excessively, and the pressure retaining property can be improved. In this respect, also in the variation shown in FIG. 19, the gas buffer member 280 can prevent the elastic seal member 70 from deforming excessively as shown in FIG. 22.

That is, the gas buffer member provided on the gas introducing space 33 side with respect to the elastic seal member 70 may have a tubular overall shape as in the embodiment above or may have a plate shape as in the variations above.

In addition, the force generated when the elastic seal member 70 pushed by a gas comes into contact with the lid main body 141 can be dispersed and received by the intermediate plate 241, and the elastic seal member 70 can be more reliably prevented from deforming excessively. In this respect, in the variation shown in FIG. 18, the intermediate plate 241 can more reliably prevent the elastic seal member 70 from deforming excessively as shown in FIG. 21.

That is, the configuration in which the elastic seal member 70 is prevented from deforming excessively on the blocking end portion side may be formed at the blocking end portion per se or may be formed in the intermediate plate provided separately from the blocking end portion.

While the present invention has been described above in detail, the foregoing description is in all aspects illustrative, and the present invention is not limited thereto. That is, numerous modifications and variations can be devised in the described aspects without departing from the scope of the invention.

### Description of Reference Symbols

- 10: seat belt device
- 11: webbing
- 16: buckle
- 20: pretensioner device
- 22: pretensioner main body
- 26: cylindrical space
- 33: gas introducing space
- 35: sealing space
- 39: gas supply port
- 41: lid main body (blocking end portion)
- 42: first through hole portion
- 50: piston
- 60: coupling member
- 62: wire
- 70: elastic seal member
- 72: second through hole portion
- 72a: hole
- 80: gas buffer member
- 82: tubular portion
- 84: flanged portion
- 86: third through hole portion
- 86a: hole
- 90: gas generator
- 141: lid main body
- 142: first through hole portion
- 180: tubular member
- 186: through hole
- 241: intermediate plate
- 242: fourth through hole portion
- 280: gas buffer member
- 286: third through hole portion
- 286a: hole

## Claims

1. A pretensioner device, comprising:
a pretensioner main body, in which a cylindrical space and a gas introducing space connecting with one end of said cylindrical space are formed, a gas supply port for supplying gas to said gas introducing space is formed, and a blocking end portion including a first through hole portion is provided so as to block said gas introducing space on a side opposite to said cylindrical space;
a gas generator configured to supply gas to said gas introducing space through said gas supply port;
a piston disposed so as to move within said cylindrical space;
a coupling member that includes one end coupled to said piston and is guided to the outside from said gas introducing space through said first through hole portion;
an elastic seal member that is provided on an inner surface side of said blocking end portion and includes a second through hole portion allowing said coupling member to pass therethrough; and
a gas buffer member that is provided at such a position as to sandwich said elastic seal member between said blocking end portion and said gas buffer member and includes a third through hole portion having a shape and a size corresponding to a shape and a size of a cross-section of said coupling member.

2. The pretensioner device according to claim 1, wherein
said coupling member includes a plurality of wires bundled, and
said third through hole portion is configured such that a plurality of holes allowing said plurality of wires to respectively pass therethrough are formed in a connecting manner or a separate manner.

3. The pretensioner device according to claim 1, wherein said gas buffer member includes:
a tubular portion into which said coupling member is inserted so as to move within said gas introducing space; and
a flanged portion formed so as to project from one end of said tubular portion toward an outer periphery thereof and provided on said gas introducing space side of said elastic seal member.

4. The pretensioner device according to claim 1, wherein said gas buffer member is a plate member provided on said gas introducing space side of said elastic seal member.

5. The pretensioner device according to claim 4, further comprising a tubular member into which said coupling member is inserted so as to move within said gas introducing space.

6. The pretensioner device according to claim 1, wherein an intermediate plate including a fourth through hole portion is provided between said blocking end portion and said elastic seal member, said fourth through hole portion being smaller than said first through hole portion and allowing said coupling member to pass therethrough.

7. The pretensioner device according to claim 1, wherein
said coupling member includes a plurality of wires bundled, and
said first through hole portion of said blocking end portion or said fourth through hole portion of said intermediate plate to be provided in contact with said blocking end portion is formed to have a shape and a size corresponding to the shape and the size of the cross-section of said coupling member.

8. A seat belt device to be incorporated into an occupant seat of a vehicle, comprising:
webbing for restraining a passenger of a vehicle;
a tongue plate mounted to said webbing;
a buckle configured to be coupled to and released from said tongue plate; and
said pretensioner device according to any one of claims 1 to 7, in which the other end portion of said coupling member is coupled to a securing-side end portion of said webbing or said buckle.
